Europäisches Patentamt

(19) European Patent Office

Office européen des brevets

(11) Publication number: **0 049 117**
A1

## (12) EUROPEAN PATENT APPLICATION

(21) Application number: **81304414.6**

(22) Date of filing: **24.09.81**

(51) Int. Cl.³: **F 24 H 9/20**, G 05 D 23/24

(30) Priority: **25.09.80 GB 8030940**

(43) Date of publication of application: **07.04.82**
**Bulletin 82/14**

(84) Designated Contracting States: **DE FR GB**

(71) Applicant: **CARCO ACCESSORIES LIMITED, Acre House, Kilsyth Glasgow G65 OPT., Scotland (GB)**

(72) Inventor: **Johnstone, Frank, 5 Mallaig Place, Glasgow S.W.I Scotland (GB)**

(74) Representative: **Caro, William Egerton et al, J. MILLER & CO. Lincoln House 296-302 High Holborn, London WC1V 7JH (GB)**

(54) **A warm air heater.**

(57) A warm air heater has a fuel burner, a heat exchanger heated by burner and a fan for passing air to be heated over the heat exchanger. The warm air heater is controlled by control apparatus having a first temperature sensor (TH4) for sensing the temperature in the space to be heated and a second temperature sensor (TH1, TH2) for sensing the temperature of the heat exchanger. Control circuitry controls energisation of the fan and the burner in dependence upon the temperatures sensed by the temperature sensors so that the temperature of air at the outlet of the warm air heater is modulated between predetermined maximum and minimum limits.

0049117

- 1 -

"A WARM AIR HEATER"

This invention relates to warm air heaters.

A warm air heater utilising a combustible fuel, consists of a fuel burner having ignition and run sequence control, firing into a heat exchanger arranged to be heated by the burner, and a fan control system to allow a fan unit to be energised at a comfortable discharge condition and to be de-energised after it is safe enough to terminate the air flow. The requirement of such a fan control system can be seen when the heat exchanger and its effect is analysed. The heat exchanger of a warm air heater generally is of a fairly massive construction and is designed to operate as a furnace and is subject to relatively great wear and tear. As a result, the heat exchanger is usually constructed, for example, in steel and steel inevitably has an effect on the thermal behaviour and heat transfer from the heat exchanger to the air which is blown over it and which is discharged into a space to be heated. When the heat exchanger reaches a pre-determined temperature and the fan unit is energised, the temperature of the air discharged into the space will be below the temperature detected in the natural convection state, i.e. before the fan unit is energised. The thermal conductivity of the heat exchanger determines the heat transfer rate from the burner to the air passing over the heat exchanger. Thus, if the heat exchanger is manufactured from material which has a relatively high mass to surface area ratio and relatively poor thermal conductivity, the control of energisation of the fan unit is required at a temperature well above the limit of comfort in the space to be heated because steel, having a low thermal conductivity in comparison to, for example, copper, is such that the temperature of the air discharged into the space will fall from an initially high level when the fan unit is first energised. Thus with an air flow having a moving air speed of about 30,000 cm/min (1000 ft/min) the air discharged in the space will be of the order of $37^{\circ}C$ ($100^{\circ}F$) and this is uncomfortable to the human body and any occupant within the space will feel discomfort. It has been traditional, therefore, to control the discharge from a warm air heater with a thermostat located in the space to be heated, which thermostat controls combustion, and to avoid discomfort a bimetallic scroll thermostat has been used to control energisation of the fan unit. Such a scroll thermostat is usually located above the heat exchanger so that it detects the natural convection coming from the heat exchanger during the ignition cycle, and generally it engages the fan unit at a temperature of about $60^{\circ}C$ ($140^{\circ}F$) and de-energises the fan unit at a temperature of about $43^{\circ}C$ ($110^{\circ}F$).

It will be appreciated that the thermal inertia of a heat exchanger of a warm air heater will have a significant amount of heat stored within it after the combustion cycle has been terminated, and this heat must be extracted to allow the warm air heater to be switched off at a safe temperature. Thus the fan unit will remain energised, after the combustion cycle has been terminated, for a blow-down period of 2 to 4 minutes, this blow-down period being determined by the thermal capacity of the heat exchanger. Thus, in severe weather conditions, for example with an outside temperature of $1^{\circ}C$ ($30^{\circ}F$) and a desired temperature of $21^{\circ}C$ ($70^{\circ}F$) in the space to be heated, and with the warm air heater properly sized for the space to be heated, the temperature in the space to be heated will be seen to fall considerably below the desired temperature, after there is a demand for heat and before the warm air heater responds to the demand. This is caused because initially the heat produced by the burner is used to heat the heat exchanger which at this stage is relatively cool due to the blow-down period which occurred after the previous combustion cycle was terminated. The thermal inertia of the heat exchanger usually will not cause the temperature in the space to be heated to rise above the desired temperature in such circumstances because the heat stored in the heat exchanger rarely is a significant percentage of the heat output of the warm air heater when the demand for heat in the space to be heated is at a maximum.

Conversely, in relatively mild weather conditions when there is demand for heat in the space to be heated, the ignition cycle is initiated, the burner ignites, the heat exchanger is heated and the fan unit is energised to discharge warm air into the space to be heated. When the temperature in the space to be heated reaches the desired temperature, the combustion cycle is terminated and the heat stored in the heat exchanger is then discharged into the space. The heat stored in the heat exchanger in such circumstances is a relatively large proportion of the heat demanded in the space and can result in the temperature in the space to be heated rising considerably above the desired temperature causing discomfort and waste of fuel.

In our British Patent Application No. 46739/78 (Serial No. A 2 035 616) there is described a control apparatus for a fuel fired central heating boiler in which outside or ambient temperature requirements are compared with the actual desired temperature in the space to be heated and the discharged temperature of a central heating boiler is controlled thereby. Such a control apparatus requires to be inserted in a combustion circuit to control a burner.

If a control apparatus as described in said British Patent Application No. 46739/78 were used to control a conventional warm air heater, the sensor, sensing ambient temperature outside the space to be heated, is required to operate in conjunction with a sensor located within the warm air heater, detecting the temperature of air discharged into the space to be heated to adjust the combustion cycle of the burner to maintain the temperature of the air discharged from the warm air heater to suit the demand for heat from the space to be heated. Thus in relatively mild weather conditions this control apparatus can in fact de-energise the burner prior to energisation of the fan unit especially where the heat exchanger has a high thermal capacity and it is even possible for combustion to cycle under the influence of the control apparatus for a considerable period of time before thermal inertia will allow a relatively insensitive bimetallic scroll thermostat in the space to be heated to energise the fan unit. Nor would this situation improve if any rise in ambient temperature took place after there had been a demand for heat from the space to be heated because although the control apparatus could cycle the burner at an automatically reduced temperature it would now clearly be below that required to energise the fan unit. Consequently, the heat exchanger would be thermally stressed and heat would be discharged through the flue system. Adjusting the bimetallic scroll thermostat to allow for energisation of the fan unit at a lower temperature has the converse effect of allowing the fan unit to discharge air to the space to be heated during the blow down period at a temperature so low as to cause discomfort. To enable such a control apparatus as described in our British Patent Application No. 46739/78 (Serial No. A 2 035 616) to control a warm air heater successfully it is necessary to take into account the heat inertia characteristics of the heat exchanger but yet without the control apparatus being as insensitive as a bimetallic scroll thermostat and yet not so sensitive as to permit the fan unit to cycle on the temperature difference created by the thermal inertia of the heat exchanger between periods of energisation and de-energisation of the fan unit.

According to the present invention there is provided a warm air heater having a fuel burner, a heat exchanger arranged to be heated by the burner, and fan means for passing air to be heated over the heat exchanger characterised by control apparatus comprising first temperature sensing means for sensing the temperature of a space to be heated, second temperature sensing means for sensing the temperature of the heat exchanger and control means for controlling energisation of said fan means and/or said burner in dependence upon the temperatures sensed by said first and second temperature sensing means so that the temperature of air at the outlet of the warm air heater is modulated between predetermined maximum and minimum temperatures.

The warm air heater preferably includes third temperature sensing means for sensing ambient temperature, the control means selectively controlling energisation of the fan means and burner in dependence upon the temperatures sensed by the first, second and third sensing means.

Resettable means may be provided for preventing initiating combustion of the burner when the second temperature sensing means senses a given temperature treater than the maximum temperature.

Preferably means are provided for varying the modulation of the temperature of the air at the outlet of the warm air heater to suit the characteristics of the burner and/or heat exchanger.

The control means may be arranged to control the time between initiation of combustion in the burner and energisation of the fan means and/or between termination of combustion in the burner and de-energisation of the fan means in dependence upon, inter alia, temperatures sensed by the sensing means.

Preferably the control means is arranged to give priority selectively to the output of one of the sensing means during given parts of the cycle of operation of the heat exchanger.

The control means may be such that de-energisation of the fan means, in operation, signals initiation of combustion.

The invention is illustrated, merely by way of example, in the accompanying drawings, in which:-

Figure 1 is a circuit diagram of one embodiment of a control apparatus of a warm air heater according to the present invention;

- 6 -

Figure 2 is a circuit diagram of a modification of the control apparatus of Figure 1;

Figure 3 is a circuit diagram of another embodiment of a control apparatus for a warm air heater according to the present invention; and

Figure 4 is a circuit diagram of yet another embodiment of a control apparatus of a warm air heater according to the present invention.

Throughout the drawings like parts have been designated by the same reference numerals.

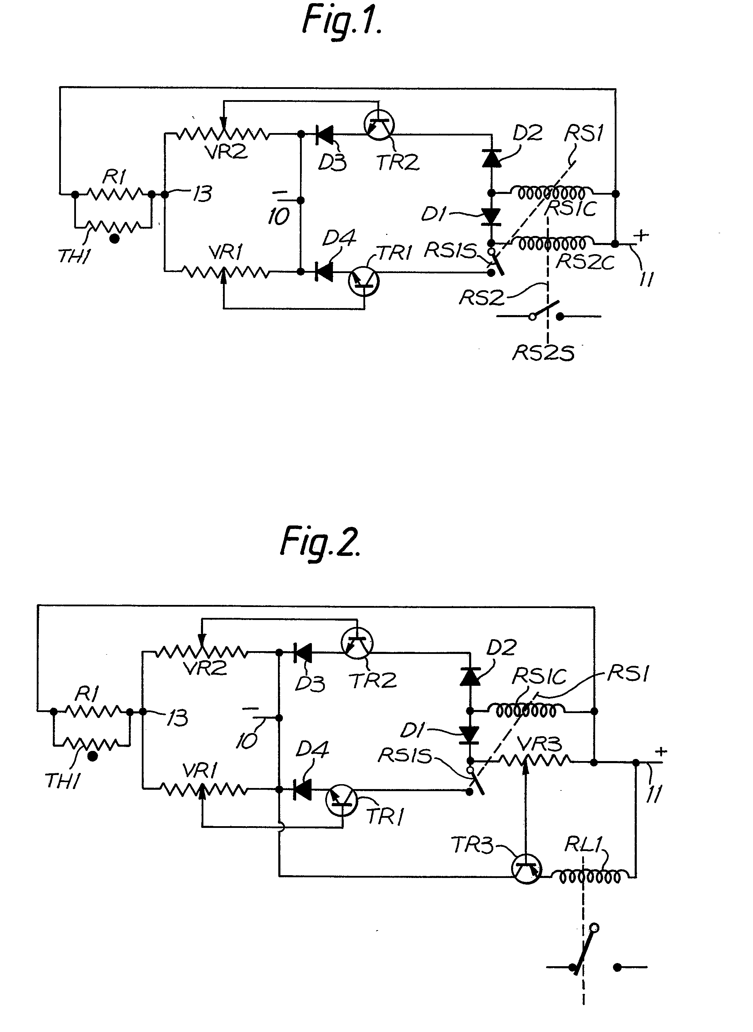

Referring first to Figure 1, there is illustrated one embodiment of a control apparatus of a warm air heater according to the present invention. This control apparatus comprises a thermistor TH1, and variable resistors VR1, VR2 forming a first potential divider between supply lines 10, 11. A coil RS1C of a reed switch RS1, a diode D1, a diode D2, a switch RS1S of the reed switch RS1, transistors TR1, TR2, and diodes D3, D4 form a second potential divider between the supply lines. A DC reference voltage is applied to the supply lines 10, 11 for example, by means of a power source such as that illustrated in our British Patent No. 1 599 757 (or German Specification No. 2 804 832).

The thermistor TH1 is connected in parallel with a resistor R1 to make the resistance-temperature characteristics of the thermistor TH1 substantially linear. One side of both the variable resistors VR1, VR2 is connected to a common junction 13 of the parallel arrangement of the thermistor TH1 and the resistor R1. A centre tap of the variable resistor VR1 is connected to the base of the transistor TR1 and the centre tap of the resistor VR2 is connected to the base of the transistor TR2. Thus setting of the variable resistors VR1, VR2 determines the operating points of the transistors TR1, TR2 respectively. The second potential divider is so constructed that the coil RS1C forms a common load in the emitter-collector path of the transistors TR1, TR2. This common load is diode discriminated by the diode D1 between the connections to transistors TR1, TR2. The reed switch RS1 is of the normally open type.

The control apparatus of Figure 1 operates as follows. With the switch RS1S of the reed switch RS1 open, that is with the coil RS1C de-energised, and with the variable resistor VR2 set at a lower resistance between the line 10 and the centre tap than the variable resistor VR1, then a larger voltage change across the resistor R1 will have to take place to reach the base-emitter voltage of the transistor TR2. Thus the transistor TR1 will be rendered conductive before the transistor TR2. Thus with a temperature rise sensing by the thermistor TH1, the voltage across the resistor R1 will fall, and the voltage at the common junction 13 will rise. Likewise, the voltage at the centre taps of the variable resistors VR1, VR2 will rise, but by different amounts due to their different settings. As the switch RS1S is normally open, the centre tap of the variable resistor VR1 will supply a base emitter current to the transistor TR1 which becomes conductive. As the temperature continues to rise, the voltage at the base of the transistor TR2 continues to rise and when it becomes conductive and current flows through the coil RS1C, the diode D2, the transistor TR2 and the diode D3 the reed switch RS1S is energised so closing the switch RS1S. The coil RS1C is thus connected through the switch RS1S to the transistor TR1 via the diode D1.

When the transistor TR2 becomes conductive, no current flows through a coil RS2C of a reed switch RS2 due to the diode D1. The coil RS2C of the reed switch RS2 is in parallel with the coil RS1C of the reed switch RS1. However, when the switch RS1S closes, the reed switch RS2 is energised and the switch RS2S thereof is closed. The switch RS2S is connected to operate a fan unit (not

- 8 -

shown) of a warm air heater having a fuel burner and a heat exchanger heated by the burner.

If a temperature decrease should take place with the reed switch RS2 energised, the voltage on the base of the transistor TR2 will fall, (bearing in mind that because there is only a very small voltage drop across the diode D3, only a small resistance change of the thermistor TH1 is required to render the transistor TR2 non-conductive),rendering the transistor TR2 non-conductive. The transistor TR1, however, remains conductive and the reed switch RS1 remains energised since current flows through the coil RS1C, the diode D1, the switch RS1S and the transistor TR1. The voltage to the base of the transistor TR1 requires to fall considerably before it becomes non-conductive and the reed switches RS1, RS2 become de-energised. Thus the transistor TR1 becomes non-conductive at a temperature considerably below that required to render the transistor TR2 non-conductive.

When the reed switch RS1 is de-energised, the reed switch RS2 is de-energised at the same time. The arrangement is such that by adjustment of the variable resistors VR1, VR2, the energisation of the reed switch RS1 can be caused by anything from a small voltage change across the resistor R1 to a large voltage change, the voltage change being dependent upon temperature as sensed by the thermistor TH1. Thus the voltage required to energise and de-energise the reed switch RS1 may be made very small and shared by the transistors TR1, TR2 when the variable resistors VR1, VR2 are set identically. Thus in the case where the control apparatus is used to control the fan unit for warm air heating, the variable resistors VR1, VR2 can be set appropriately to the heat inertia characteristics of a heat exchanger.

Figure 2 shows a modification of the control apparatus of Figure 1. In this modification the coil RS2C of the reed switch RS2 has been replaced by a variable resistor VR3 and the switch RS2S of the reed switch RS2 has been replaced by a transistor TR3 and a relay RL1. The relay RL1 is arranged to control energisation and de-energisation of a blower or fan unit of a warm air heater (not shown). The control apparatus of Figure 2, operates in a similar manner to the control apparatus of Figure 1.

At a temperature below a desired temperature, the relay RL1 is de-energised and the fan unit is also de-energised. With combustion established in the warm air heater and the thermistor TH1 located above a heat exchanger of the warm air heater, as the temperature of the heat exchanger rises, natural convection from the surface thereof will subject the thermistor to an increased temperature causing the voltage across the resistor R1 to fall. The temperature will rise until the thermistor TH1 causes the reed switch RS1 to energise. This will cause the transistor TR3 to become conductive and the relay RL1 will energise the fan unit. Thus a relatively high volume of cold air will flow over the heat exchanger reducing its surface temperature by an amount dependent upon the thermal inertia and heat transfer rate thereof. The thermistor TH1 will respond to this reduction in temperature. With normal high sensitivity any fall in temperature will cause the thermistors TR1, TR2 to become non-conductive immediately. However, if the voltage on the base of the transistor TR1 is well above its threshold voltage, rendering the transistor TR2 non-conductive will not cause de-energisation of the relay RL1.

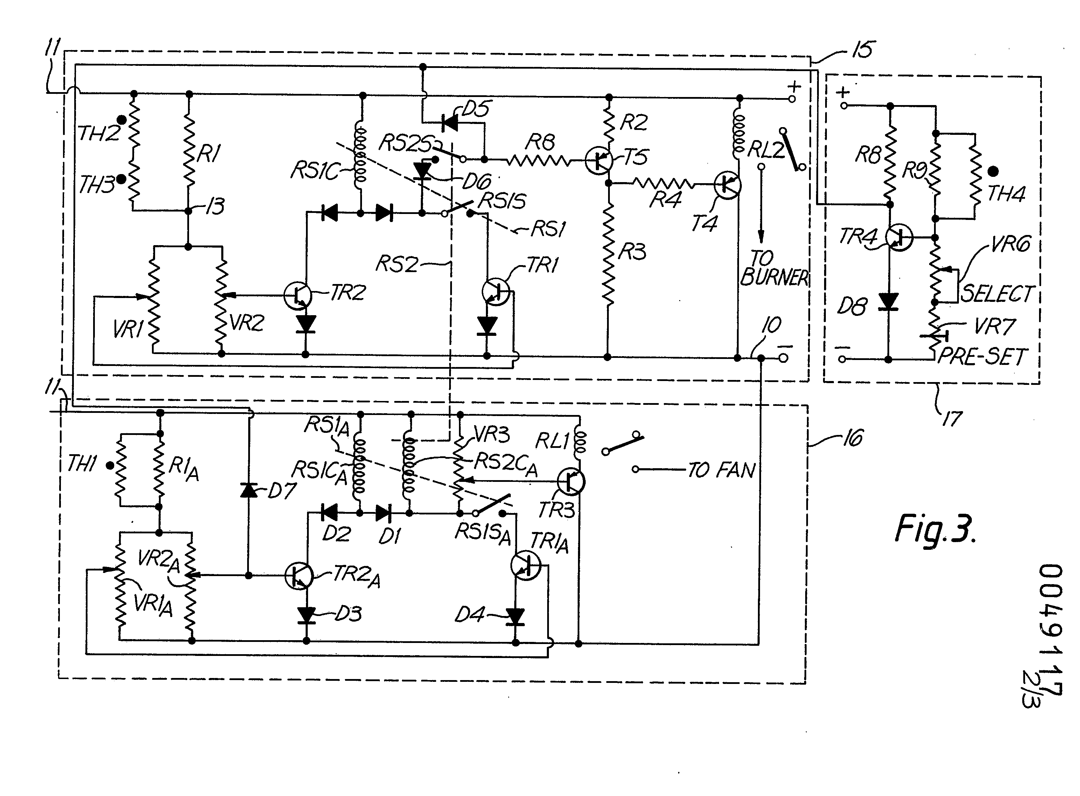

Figure 3 shows another embodiment of a control apparatus of a warm air heater according to the present invention.

The control device shown in Figure 3 has a burner control unit 15 and a fan control unit 16, each of these units incorporating control apparatus of the type illustrated in Figures 1 and 2. Like parts in the burner control unit 15 and the fan control unit 16 have been given the suffix "A" in the latter. The control device of Figure 3 also has a temperature sensor 17 for sensing the temperature in a space to be heated, the temperature sensing being performed by a thermistor TH4. The temperature sensor comprises a transistor TR4, a diode D8, resistors R8, R9 and variable resistors VR6, VR7, to set and calibrate the temperature sensor.

The burner control circuit 15 includes transistors T4,T5 and resistors R2, R3, R4 and a relay RL 2 connected as shown. A resistor R8 is connected to the anode of a diode D6 whose cathode is connected to one side of the switch RS1S of the reed switch RS1. The other side of the switch RS1S is connected to the collector of the transistor TR1.

Thermistors TH1, TH2 are located inside the warm air heater above the heat exchanger, and the thermistor TH3 is located outside the space to be heated to sense ambient temperature. Variation of temperature sensed by the thermistors TH2, TH3 controls the energisation of the relay RL2 which is connected to control a burner within the heat exchanger of the warm air heater. The thermistor TH1, which forms part of the fan control unit 16, controls the relay RL1 which, in turn, controls energisation of the fan unit. When there is a demand for heat in the space to be heated, the transistor T5 becomes non-conductive and the transistor T4 is rendered conductive. Thus the relay RL2 is energised and combustion is established in the heat exchanger. A rise in temperature in the heat exchanger will be sensed by the thermistors TH1, TH2 resulting in a voltage across the resistor R8. Thus the transistor TR2$_A$ of the fan control unit energises the reed switch RS1$_A$ and the relay RL1 so energising the fan unit.

When the temperature in the space to be heated is above that demanded, the thermistors TH2, TH3 cause the reed switch RS2 to be energised to render the transistor T5 conductive and the transistor T4 non-conductive. The relay RL2 is thus de-energised with the result that combustion is terminated. A decrease in temperature will result and the temperature of the air delivered into the space to be heated will decrease. When this is sensed by the thermistor TH1 of the fan control unit the fan unit will be de-energised. The burner will continue to cycle under the control of the thermistors TH2, TH3 until the temperature reached is such that the transistor TR1 of the burner control unit is de-energised. Thus the control device will continue to operate and control the burner with a minimum temperature determined by the transistor $TR1_A$ which will then de-energise the fan unit and energise the burner. Thus the burner and fan unit are controlled in dependence upon heat requirements in the space to be heated and ambient temperature in such a way as not to produce discomfort within the space to be heated and at a cycle frequency which can be adjusted so as to reduce wear and tear on the heat exchanger. The discharge air temperature cycling at any level between the desired minimum and maximum avoiding continuous combustion of the burner between demand for heat in the space, and that heat requirement being satisfied.

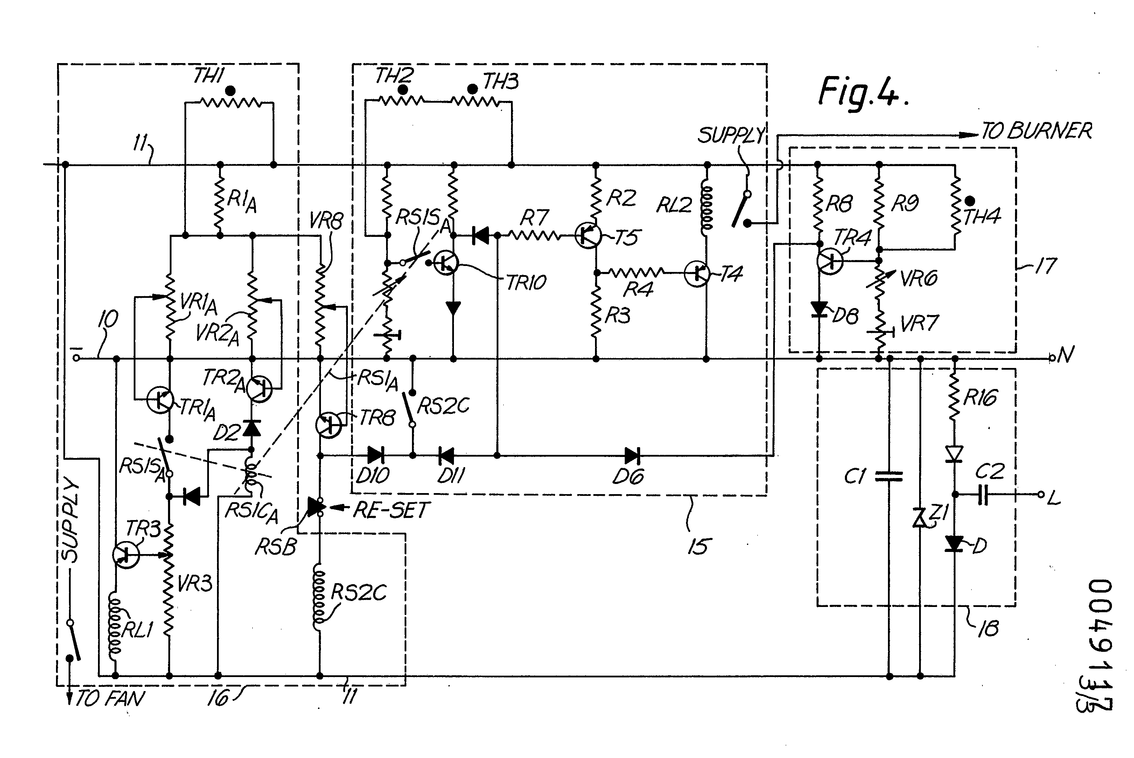

Figure 4 illustrates another embodiment of a control apparatus of a warm air heater according to the present invention. The control apparatus shown in Figure 4 operates as follows. With demand for heat in the space to be heated sensed by the thermistor TH4, and with the thermistors TH1, TH2 "cold", transistors TR10, T5, TR4, $TR1_A$ and $TR2_A$ are non-conductive whilst the transistor T4 is conductive energising the relay RL2 which provides ignition supply to the burner of the heat exchanger. The burner is ignited by traditional ignition safety controls. The temperature of the heat exchanger rises causing a resistance change across thermistors TH1, TH2. The variable resistor $VR1_A$ is set for a lower temperature than the variable resistor $VR2_A$, whilst the variable resistor $VR2_A$ is set to a lower temperature than a variable resistor VR3. As the temperature rises and is sensed by the thermistors TH1, TH2, base emitter current flows in the transistor $TR1_A$, however as the temperature determined by the transistor $TR2_A$ is not yet achieved, no change of control action of the reed switch $RS1_A$ takes place. The temperature of the heat exchanger continues to rise until the thermistor TH1 render the transistor $TR2_A$ conductive which, in turn, energises the reed switch RS1 _via_ the diode D2 and the coil $RS1C_A$. The reed switch $RS1_A$ is then coupled by its switch $RS1S_A$ as shared collector load to the transistor $TR1_A$ _via_ the diode D1, simultaneously causing a voltage drop across the variable resistor VR3 which energises the relay RL1 to energise the fan unit of the warm air heater.

Energisation of the reed switch $RS1_A$ causes the base of the transistor TR10 to be coupled allowing the influence of the thermistor TH2 compared to the thermistor TH3 to exercise control over the transistors TR10, T5 and T4. If the temperature of air discharged from the warm air heater is too high, the transistor TR10 becomes conductive with the transistor T5, whilst the transistor T4 will become non-conductive. The relay RL2 will de-energise and combustion will be terminated, the fan unit will, however, continue to be energised as the temperature of the heat exchanger falls to the correct level. The transistor TR10 will then become non-conductive allowing the transistor T4 to re-engage the combustion supply through the relay RL2 which will cycle the temperature while the fan unit is energised continuously.

When demand for heat in the space to be heated is satisfied, the thermistor TH4 will render the transistor TR4 conductive, the transistor T5 is rendered conductive _via_ a diode D6 and a resistor R8 and this, in turn, renders the transistor T4 non-conductive and the relay RL2 terminates combustion. The fan unit continues to be energised and though the temperature may be below that determined by the transistor $TR2_A$ which may be non-conductive, the reed switch RS1 remains energised until the temperature determined by the variable resistor $TR1_A$ is obtained. As the temperature falls below that determined by the variable resistor $VR1_A$ the transistor $VR1_A$ becomes non-conductive, de-energising the reed switch $RS1_A$ and removing the voltage drop across the variable resistor VR3. This renders the transistor TR3 non-conductive and so the relay RL1 is de-energised so de-energising the fan unit.

Thus by setting the transistor $TR1_A$ to respond to temperatures above body heat and the transistor $TR2_A$ to respond to temperatures within the operating range of the thermistors TH2, TH3, the control apparatus can modulate from above body heat to maximum output of the warm air heater according to the heat demand by the thermistors TH2, TH3 with the fan unit continuously energised.

In the event that the power supply to the fan unit is faulty during start up after the transistor $TR2_A$ is conductive, the thermistor TH1 will be subjected to a continued use in temperature until a maximum temperature determined by the variable resistor VR8 is reached. The variable resistor VR8 will then render a transistor TR8 conductive energising the reed switch RS2 through its coil RS2C. The switch RS2S of the reed switch RS2 short circuits the transistor TR8 via a diode D7. The transistor T5 is rendered conductive via a diode D11 and the switch RS2S, to render the transistor T4 non-conductive terminating combustion in a "lock out facility". The control apparatus thus provides direct lock out of supply to the burner making it failsafe. To reset the control after this occurred, a reset button RSB is pushed to de-energise the reed switch RS2 and make the transistor TRS non-conductive so that the control apparatus will be returned to a condition ready for combustion to be initiated. The same can be achieved by disconnecting the lines 10, 11 from the power source. It should be appreciated that conventional electromechanical controls on such equipment provide cyclic control on overheat and rely on other means to provide a lock out facility for the burner. Regulation of the warm air heater by this type of control apparatus permits full range control from body heat to a maximum output, protects conventional start up procedure, allows the life of the fan unit to be extended without cyclic damage and further improves safety.

It should be appreciated that the base current required to charge the transistor T5 from conductive to non-conductive can be shared between the transistors TR10 and TR4 in any ratio. This action ensures that as the space approaches the desired temperature combustion is terminated to negate the thermal inertia of the heat exchanger on the space to be heated.

Figure 4 shows a power source 18 consisting of capacitors C1, C2, a zener diode Z1, diodes D12, D13 and a resistor R16 for providing a DC voltage on lines 10, 11 from an AC voltage applied to lines N, L. For a fuller understanding of the operation of this power source reference may be made to our British Patent No. 1 599 757 or German Specification No. 2 804 832.

It will be appreciated that the control apparatus will give priority selecting to the output of one of the thermistors during parts of the operating cycle of the warm air heater. Thus, for example, when the temperature in the space to be heated is above that set in the temperature sensor 17, the thermistor TH3 sensing ambient temperature will have no control of the control apparatus. It will also be appreciated that de-energisation of the fan unit, will signal initiation of combustion in the burner: whether or not such combustion takes place, however, is dependent upon, inter alia, the thermistor TH4.

- 15 -

## CLAIMS

1. A warm air heater having a fuel burner, a heat exchanger arranged to be heated by the burner, and fan means for passing air to be heated over the heat exchanger characterised by control apparatus comprising first temperature sensing means (TH4) for sensing the temperature of a space to be heated, second temperature sensing means (TH1, TH2) for sensing the temperature of the heat exchanger and control means for controlling energisation of said fan means and/or said burner in dependence upon the temperatures sensed by said first and second temperature sensing means so that the temperature of air at the outlet of the warm air heater is modulated between predetermined maximum and minimum temperatures.

2. A warm air heater as claimed in claim 1 characterised by including third temperature sensing means (TH3) for sensing ambient temperature, the control means selectively controlling energisation of the fan means and burner in dependence upon the temperatures sensed by the first, second and third sensing means.

3. A warm air heater as claimed in claim 1 or 2 characterised in that resettable means (VR8, RSB, TR8) are provided for preventing initiating combustion of the burner when the second temperature sensing means senses a given temperature greater than the maximum temperature.

4. A warm air heater as claimed in any preceding claim characterised in that means ($VR1_A$, $VR2_A$) are provided for varying the modulation of the temperature of the air at the outlet of the warm air heater to suit the characteristics of the burner and/or heat exchanger.

5. A warm air heater as claimed in any preceding claim characterised in that the control means is arranged to control the time between initiation of combustion in the burner and energisation of the fan means and/or between termination of combustion in the burner and de-energisation of the fan means in dependence upon, inter alia, temperatures sensed by the sensing means.

6.    A warm air heater as claimed in any preceding claim characterised in that the control means is arranged to give priority selectively to the output of one of the sensing means during given parts of the cycle of operation of the heat exchanger.

7.    A warm air heater as claimed in any preceding claim characterised in that the control means is such that de-energisation of the fan means, in operation, signals initiation of combustion.

Fig.1.

0049117 1/3

Fig.2.

Fig.3.

00491 17 2/3

Fig.4.

TO BURNER

00491 13/3

**European Patent Office**

**EUROPEAN SEARCH REPORT**

0049117

Application number

EP 81 30 4414

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 4 140 274 (H. NABINGER) <br><br> * column 3, line 21 to column 5, line 46; figures 1 and 2 * | 1-3 | F 24 H 9/20 <br> G 05 D 23/24 |
| | US - A - 3 126 154 (R. SHOALTS) <br><br> * column 3, line 50 to column 5, line 9; figure 2 *. | 1,2,5 | |
| | US - A - 3 838 810 (W. McMANN) <br><br> * abstract; column 3, line 16 to column 5, line 24; column 12, line 2 to column 13, line 8; figures 1-3 * | 1-4 | **TECHNICAL FIELDS SEARCHED (Int. Cl.³)** <br><br> F 24 H 9/20 <br> G 05 D 23/19 <br> 23/20 <br> 23/24 <br> 23/275 |
| | US - A - 3 603 504 (C. STANG) <br><br> * column 1, line 66 to column 2, line 71; figure 1.* | 1 | |
| D | GB - A - 2 035 616 (CARCO ACCESSORIES) <br><br> * abstract; page 1, line 99 to page 2, line 95; figure * <br><br> & EP - A - 0 012 007 | 1 | |

The present search report has been drawn up for all claims

| Place of search | Date of completion of the search | Examiner |
|---|---|---|
| The Hague | 17.12.1981 | HELOT |

EPO Form 1503.1  06.78